# EUROPEAN PATENT APPLICATION

(11) **EP 4 546 897 A1**
(43) Date of publication of application: **30.04.2025**
(21) Application number: 22947982.9
(22) Date of filing: 23.06.2022
(51) Int. Cl.: H04W 56/00

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/025083
(87) International publication number: WO 2023/248421

(57) **Abstract**

A terminal according to one aspect of the present disclosure includes: a receiving section that receives one or more timing advance commands included in a MAC control element (MAC CE) for a random access response; and a control section that judges, when application of timing advance in unit of transmission/reception point is supported, timing advance to be applied to a plurality of transmission/reception points, based on the one or more timing advance commands or based on the one or more timing advance commands and information indicated by another MAC CE.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, radio communication systems later than Rel.17/5G), it is assumed to control communication using a plurality of transmission/reception points (for example, multi-TRP (MTRP)) in a serving cell, or control communication, based on mobility between a plurality of cell (inter-cell mobility) including a non-serving cell.

However, a problem is, when a terminal (user terminal, User Equipment (UE)) performs UL transmission to a plurality of transmission/reception points, how to control the UL transmission (for example, control of timing advance and the like). When UL transmission to each of the transmission/reception points is not appropriately controlled, quality of the communication using the plurality of transmission/reception points may deteriorate.

The present disclosure has been made in view of such a respect and has an object to provide a terminal, a radio communication method, and a base station that enable appropriate communication even when the communication is performed by using a plurality of transmission/reception points.

### Solution to Problem

A terminal according to one aspect of the present disclosure includes: a receiving section that receives one or more timing advance commands included in a MAC control element (MAC CE) for a random access response; and a control section that judges, when application of timing advance in unit of transmission/reception point is supported, timing advance to be applied to a plurality of transmission/reception points, based on the one or more timing advance commands or based on the one or more timing advance commands and information indicated by another MAC CE. Advantageous Effects of Invention

According to one aspect of the present disclosure, it is possible to appropriately perform communication even when the communication is performed by using a plurality of transmission/reception points.

### Brief Description of Drawings

[FIG. 1] FIG. 1A to FIG. 1D are diagrams to show examples of multi-TRP.
[FIG. 2] FIG. 2A and FIG. 2B are diagrams to show examples of inter-cell mobility.
[FIG. 3] FIG. 3 is a diagram to show an example of timing advance groups (TAGs) to which cells included in a cell group belong.
[FIG. 4] FIG. 4 is a diagram to show an example of a MAC CE for a timing advance command.
[FIG. 5] FIG. 5A and FIG. 5B are diagrams to show examples of an event/condition of a case where a random access procedure according to a first embodiment is triggered.
[FIG. 6] FIG. 6A and FIG. 6B are diagrams to show examples of a method of using a TAC included in an RAR according to a second embodiment.
[FIG. 7] FIG. 7A and FIG. 7B are diagrams to show examples of an RAR (for example, a MAC CE for RAR) indicating a TAC according to the second embodiment.
[FIG. 8] FIG. 8A and FIG. 8B are diagrams to show other examples of an RAR (for example, a MAC CE for RAR) indicating a TAC according to the second embodiment.
[FIG. 9] FIG. 9A and FIG. 9B are diagrams to show other examples of a method of using a TAC included in an RAR according to the second embodiment.
[FIG. 10] FIG. 10 is a diagram to show an example of another MAC CE used for notification of information related to TA according to the second embodiment.
[FIG. 11] FIG. 11A and FIG. 11B are diagrams to show examples of an RAR (for example, a MAC CE for RAR) indicating a TAC according to the second embodiment.
[FIG. 12] FIG. 12 is a diagram to show an example of a schematic structure of a radio communication system according to one embodiment.
[FIG. 13] FIG. 13 is a diagram to show an example of a structure of a base station according to one embodiment.
[FIG. 14] FIG. 14 is a diagram to show an example of a structure of a user terminal according to one embodiment.
[FIG. 15] FIG. 15 is a diagram to show an example of a hardware structure of the base station and the user terminal according to one embodiment.
[FIG. 16] FIG. 16 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may mean to be assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID(s) may be a physical cell Id(s) (for example, a PCI(s)) or may be a virtual cell ID(s).

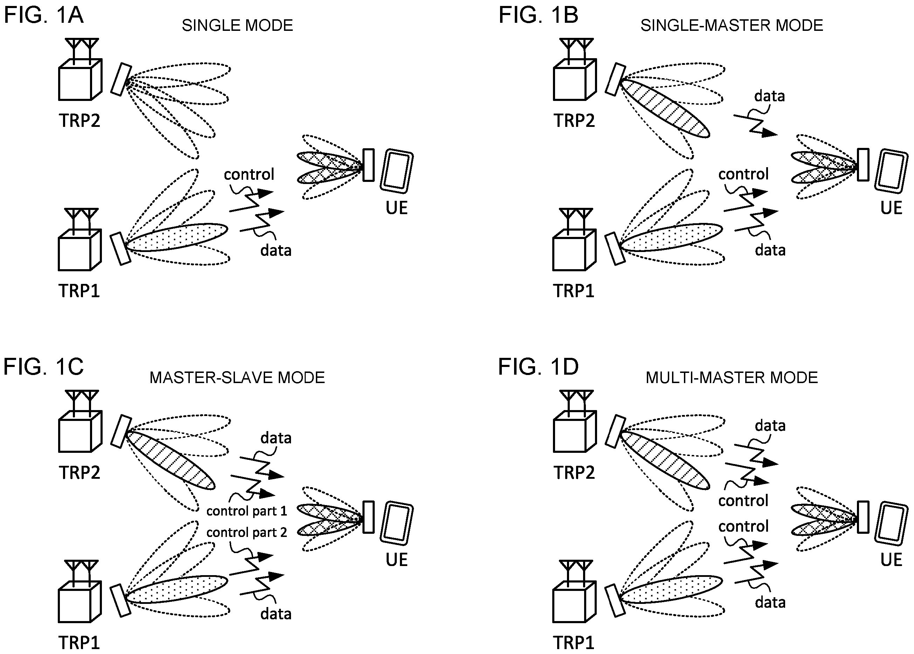

FIGS. 1A to 1D are diagrams to show examples of a multi-TRP scenario. In these examples, it is assumed that each TRP can transmit four different beams, but this is not restrictive.

FIG. 1A shows an example of a case where only one TRP (TRP1 in this example) of multi-TRP performs transmission to a UE (which may be referred to as a single mode, a single TRP, and the like). In this case, TRP1 transmits both a control signal (PDCCH) and a data signal (PDSCH) to the UE.

FIG. 1B shows an example of a case where only one TRP (TRP1 in this example) of multi-TRP transmits a control signal and the multi-TRP transmit data signals, to a UE (which may be referred to as a single-master mode). The UE receives each of PDSCHs transmitted from the multi-TRP, based on one piece of downlink control information (DCI).

FIG. 1C shows an example of a case where each of multi-TRP transmits part of a control signal and the multi-TRP transmit data signals, to a UE (which may be referred to as a master-slave mode). TRP1 may transmit part 1 of the control signal (DCI), and TRP2 may transmit part 2 of the control signal (DCI). Part 2 of the control signal may depend on part 1. The UE receives each of PDSCHs transmitted from the multi-TRP, based on these parts of the DCI.

FIG. 1D shows an example of a case where each of multi-TRP transmits separate control signals and the multi-TRP transmit data signals, to a UE (which may be referred to as a multi-master mode). TRP1 may transmit a first control signal (DCI), and TRP2 may transmit a second control signal (DCI). The UE receives each of PDSCHs transmitted from the multi-TRP, based on these pieces of DCI.

When a plurality of PDSCHs from multi-TRP (which may be referred to as multi-PDSCH (multiple PDSCHs)) are scheduled by using one piece of DCI as in FIG. 1B, the DCI may be referred to as single DCI (S-DCI, single PDCCH). When a plurality of PDSCHs from multi-TRP are scheduled by using a plurality of pieces of DCI as in FIG. 1D, the plurality of DCI may be referred to as multi-DCI (M-DCI, multi-PDCCH (multiple PDCCHs)).

Each TRP of the multi-TRP may transmit a different transport block (TB)/codeword (Code Word (CW))/ different layer. Alternatively, each TRP of the multi-TRP may transmit the same TB/CW/layer.

As one mode of multi-TRP transmission, non-coherent joint transmission (NCJT) is studied. In NCJT, for example, TRP1 performs modulation mapping on a first codeword, performs layer mapping, and transmits a first PDSCH in layers of a first number (for example, two layers) by using first precoding. TRP2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from the first TRP and the second PDSCH from the second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a given QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

NCJT using multi-TRP/panel may use a high rank. To support ideal and non-ideal backhaul between a plurality of TRPs, both single DCI (single PDCCH, for example, FIG. 1B) and multi-DCI (multi-PDCCH, for example, FIG. 1D) may be supported. For both single DCI and multi-DCI, the maximum number of TRPs may be two.

For single-PDCCH design (mainly for ideal backhaul), TCI enhancement is studied. Each TCI codepoint in DCI may correspond to one or two TCI states. A TCI field size may be the same as that of Rel. 15.

For a PDCCH/CORESET defined in Rel. 15, one TCI state with no CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-TRP based on multi-DCI.

### (Inter-cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

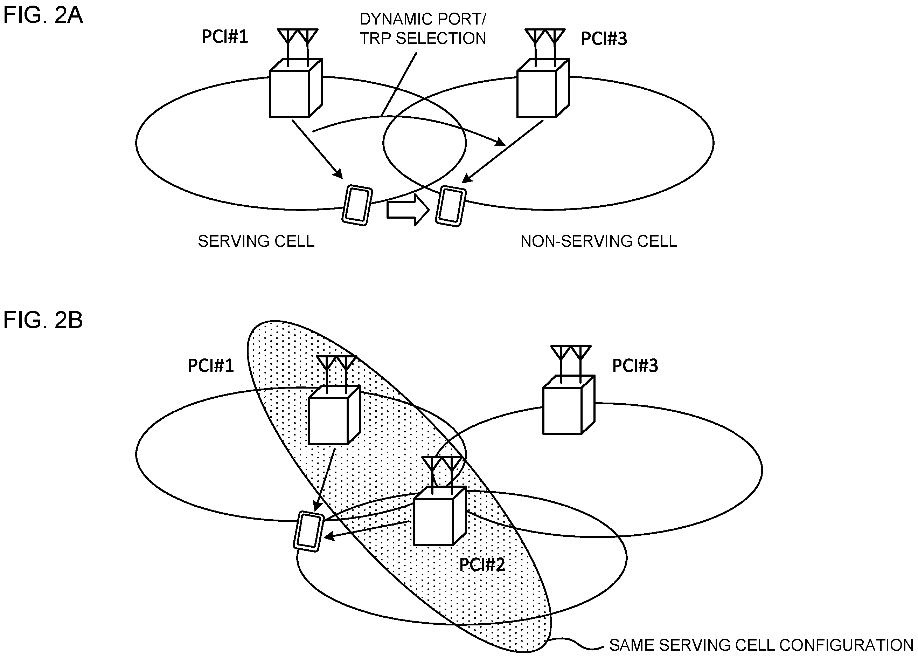

It is conceivable that the UE receives channels/signals from a plurality of cells/TRPs in inter-cell mobility (for example, L1/L2, inter cell mobility) (see FIGS. 2A and 2B).

FIG. 2A shows an example of inter-cell mobility including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell and a base station/TRP of cell #3 not being a serving cell (being a non-serving cell). For example, this corresponds to a case where the UE switches (for example, fast cell switch) from cell #1 to cell #3. The TRP of the serving cell may be referred to as a primary TRP (for example, a pTRP). The TRP of the non-serving cell may be referred to as an additional TRP (aTRP).

In this case, selection of or a port (for example, an antenna port)/TRP may be performed dynamically. The selection of or a port (for example, an antenna port)/TRP may be performed based on indication by DCI/MAC CE or an updated TCI state. Here, shown is a case where configuration of different physical cell IDs (for example, PCIs) for cell #1 and Cell #3 is supported.

FIG. 2B shows an example of a multi-TRP scenario (for example, inter-cell mobility in a case of using multi-TRP (Multi-TRP inter-cell mobility)). A UE may be configured with a plurality of (for example two) TRPs (or different CORESET pool indices) in each cell. Here, shown is a case where the UE receives channels/signals from TRP #1 and TRP2. Here, also shown is a case where TRP #1 corresponds to physical cell ID (PCI) #1 while TRP #2 corresponds to PCI #2.

The multi-TRP (TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 2B. Here, shown is a case where NCJT is performed between TRPs corresponding to different PCIs. Note that the same serving cell configuration may be employed/configured for TRP #1 and TRP #2.

A plurality of PDSCHs (multi-PDSCH) transmitted by NCJT may be defined to partially or entirely overlap in terms of at least one of the time and frequency domains. In other words, the first PDSCH from TRP #1 and the second PDSCH from TRP #2 may overlap in terms of at least one of the time and frequency resources. The first PDSCH and the second PDSCH may be used for transmission of the same TB or may be used for transmission of different TBs.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a given QCL type (for example, QCL type D).

A plurality of PDSCHs (which may be referred to as multi-PDSCH (multiple PDSCHs)) from the multi-TRP may be scheduled by using one piece of DCI (single DCI (S-DCI), single PDCCH) (single-master mode). The one piece of DCI may be transmitted from one TRP of the multi-TRP. A configuration using one piece of DCI in multi-TRP may be referred to as single-DCI based multi-TRP (mTRP/MTRP).

The plurality of PDSCHs from the multi-TRP may be separately scheduled by using a plurality of pieces of DCI (multi-DCI (M-DCI), multi-PDCCH (multiple PDCCHs)) (multi-master mode). The plurality of respective pieces of DCI may be transmitted from the multi-TRP. A configuration using a plurality of pieces of DCI in multi-TRP may be referred to as multi-DCI based multi-TRP (mTRP/MTRP).

The UE may assume to transmit, to the different TRPs, separate CSI reports regarding the respective TRPs. Such CSI feedback may be referred to as separate feedback, separate CSI feedback, and the like. In the present disclosure, "separate" may be interchangeably interpreted as "independent."

In Rel-17 NR or later versions, it is assumed that beam indication to a TCI state associated with a different PCI by a MAC CE/DCI is supported. In Rel-18 NR or later versions, it is assumed that indication of a change of a serving cell to a cell having a different PCI by a MAC CE/DCI is supported.

### (Timing Advance Group)

When a plurality of TRPs are used, a case also arises that a UE and each of the TRPs have a different distance. The plurality of TRPs may be included in the same cell (for example, a serving cell). Alternatively, among the plurality of TRPs, a given TRP may correspond to a serving cell while the other TRP(s) may correspond to a non-serving cell. In this case, it is also assumed that each of the TRPs and the UE have a different distance.

In an existing system, transmission timing of a UL (Uplink) channel and/or UL signal (UL channel/signal) is adjusted by timing advance (TA). Reception timing of UL channels/signals from different user terminals (UEs) is aligned on the radio base station (also referred to as TRP (Transmission and Reception Point), gNB (gNodeB), and the like) side.

A UE may use timing advance for each timing advance group (TAG) configured in advance (multiple timing advances) to perform timing control for UL transmission.

When multiple timing advances are employed, timing advance groups (TAGs) categorized according to transmission timing are supported. The UE may assume that the same TA offset (or TA value) is used for each TAG, to control UL transmission timing for each TAG. In other words, the TA offset may be configured independently for each TAG.

In a case of employing multiple timing advances, by the UE aligning transmission timing independently for cells belonging to each TAG, uplink signal reception timing from the UE can be timed at a radio base station even when a plurality of cells are used.

A TAG (for example, serving cells belonging to the same TAG) may be configured by a higher layer parameter. For the serving cells belonging to the same TAG, the same timing advance value may be used. A timing advance group including an SpCell of a MAC entity may be referred to as a primary timing advance group (PTAG), and other TAGs may be referred as secondary timing advance groups (STAGs).

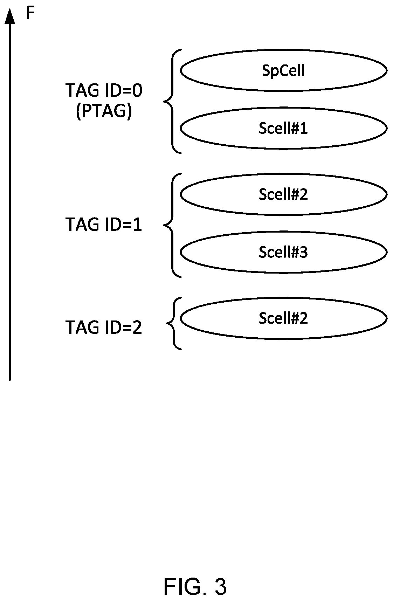

In an existing system (for example, Rel-16 NR), configuration of four TAGs at maximum for each cell group (for example, MCG/SCG) is supported (see FIG. 3). FIG. 3 shows a case where three TAGs are configured for a cell group including an SpCell and SCells #1 to #4. Here, the SpCell and SCell #1 belong to the first TAG (PTAG or TAG #0), SCell #2 and SCell #3 belong to the second TAG (TAG #1), and SCell #4 belongs to the third TAG (TAG #2).

The UE may be notified of a timing advance command (TA command) by using a MAC control element (for example, a MAC CE). The TA command is a command indicating an uplink channel transmission timing value and is included in the MAC control element. The TA command is signaled from the radio base station to the UE by a MAC layer. The UE controls a given timer (for example, a TA timer), based on reception of the TA command.

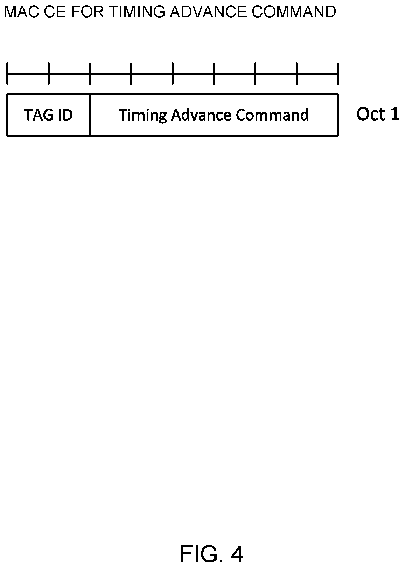

The MAC CE for timing advance command (TAC MAC CE) may include a field for a timing advance group index (for example, a TAG ID) and a field for a timing advance command (see FIG. 4).

In contrast, for future radio communication systems, assumed is a case where a different TAG (or TAG-ID) is configured for each of one or more TRPs corresponding to a given cell (or CC). Alternatively, assumed is a case where a common TAG is shared by different TRPs corresponding to a given cell. Alternatively, assumed is a case where a MAC CE for TA command is used only for one TRP or a case where a MAC CE for TA command is used for a plurality of TRPs.

Alternatively, assumed is a case where TRPs corresponding to respective different cells use different TAGs/share a common TAG. For example, assumed is that UL transmission is controlled based on a common/different timing advances, for a serving cell (or a TRP(s) in the serving cell) and a non-serving cell (or a TRP(s) in the non-serving cell) in inter-cell mobility.

As described above, in MIMO of Rel. 18 or later versions, it is assumed that two timing advances (TAs) for two TRPs are supported in multi-TRP operation using multi-DCI.

When TAGs are configured/controlled in units of TRP, a time alignment timer (for example, timeAlignmentTimer) may be configured for each TRP. The time alignment timer may control a time regarded by a MAC entity that a serving cell(s) belonging to an associated TAG is uplink time aligned. For example, for maintenance of UL time alignment, a time alignment timer may be configured by RRC.

The time alignment timer (for example, timeAlignementTimer) may be maintained for UL time alignment. In Rel. 17, such a time alignment timer (for example, timeAlignementTimer) corresponds to each TAG. When a UE has received a MAC CE for timing advance command (for example, a TAC MAC CE), the UE starts or restarts a time alignment timer associated with each indicated timing advance group (for example, TAG).

When the TAC MAC CE is received and a given value (N_{TA}) is maintained with the indicated TAG, the MAC entity uses a timing advance command for the indicated TAG, or starts or restarts the time alignment timer associated with the indicated TAG. The given value (N_{TA}) may be timing advance between DL and UL.

Operation when the time alignment timer has expired may be defined separately for each of a PTAG and an STAG. Note that a timing advance group (TAG) including an SpCell of a MAC entity may be referred to as a primary timing advance group (PTAG), and other TAGs may be referred as secondary timing advance groups (STAGs).

For example, in Rel. 17, it is supported that a given operation for PTAG is employed when a timing advance timer corresponding to a PTAG has expired and a given operation for STAG is employed when a timing advance timer corresponding to an STAG has expired.

For example, when a time alignment timer has expired, the following operations (for example, the given operation for PTAG/given operation for STAG) may be performed.

### {Given Operation for PTAG}

When the time alignment timer is associated with a PTAG,
- flash all the HARQ buffers of all serving cells
- if configured, notify RRC so as to release a PUCCH for all the serving cells
- if configured, notify RRC so as to release an SRS
- clear all configured DL allocation and configured UL allocation
- clear PUSCH resources for semi-persistent CSI reporting
- make all running time alignment timers expired
- maintain N_{TA} of all the TAGs

### {Given Operation for STAG}

When the time alignment timer is associated with an STAG, for all the serving cells belonging to the TAG,
- flash all the HARQ buffers
- if configured, notify RRC so as to release a PUCCH
- if configured, notify RRC so as to release an SRS
- clear all configured DL allocation and UL allocation
- clear PUSCH resources for semi-persistent CSI reporting
- maintain N_{TA} of the TAGs

### (TA Control in Units of TRP/panel)

As described above, when communication is performed by using a plurality of transmission/reception points (for example, TRPs)/panels, it is also assumed to control timing advance for each TRP/panel.

For example, TA may be applied for each TRP (or indication in units of TRP TA may be performed). For example, at least one of the following options may be employed.

### {Option 1}

A different TAG-ID may be configured for each TRP, and a different MAC CE for TA command may be configured for each TRP. Each TAG may maintain a time alignment timer for UL time alignment.

### {Option 2}

Different TRPs may share a TAG. A MAC CE for TA command may be used only for one TRP. A UE uses different TA for the other TRP(s). For example, the UE may adjust a TA value for the other TRP(s) (for example, TRP #1) by a TA offset (TA_TRP_offset), based on TA for TRP #0 (TA TRP #0).

In this case, only one time alignment timer may be present for UL time alignment of a plurality of TRPs. This may mean that UL time alignment may be simultaneous maintained or lost for the plurality of TRPs.

### {Option 3}

The number of TAGs may be one. A MAC CE for TA command may be used for a plurality of serving TRPs for a UE.

### {Option 4}

The number of TAGs may be one. A MAC CE for TA command received by a TRP/CW/PDSCH/DMRS port group may be used for a TRP/CW/PDSCH/DMRS port group of the same TAG. Each TRP/CW/PDSCH/DMRS port group of the TAG may maintain a time alignment timer for UL time alignment.

As described above, in Rel. 18 or later versions, it is also assumed that a plurality of timing advances are supported in multi-TRP (for example, multi-TRP using multi-DCI). For example, a plurality of (for example, two) timing advances may be supported for multi-TRP (for example, two TRPs) using multi-DCI. Application of a plurality of timing advances for multi-TRP may be supported in an intra-cell/inter-cell multi-DCI multi-TRP scenario or may be supported in a plurality of frequency ranges (for example, FR1 and FR2).

A problem is, when application/configuration of timing advance in units of TRP is supported, how to control timing advance. For example, a problem is how to control an event/condition that triggers a random access procedure (case 1).

Alternatively, a problem is, when application/configuration of timing advance in units of TRP is supported, how to control use of a timing advance command indicated by a given MAC CE (for example, a MAC RAR) (case 2/3). Alternatively, a problem is, when application/configuration of timing advance in units of TRP is supported, how to control use of a time alignment timer (case 4).

Alternatively, a problem is, when application/configuration of timing advance in units of TRP is supported, how to control random access resource selection in a random access procedure used for control of timing advance (case 5).

The inventors of the present invention focused on cases 1 to 5 in a case where application/configuration of timing advance in units of TRP is supported, studied about timing advance control for at least one of cases 1 to 5, and came up with the idea of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of pieces of spatial relation information", "one or a plurality of pieces of spatial relation information", and the like. The TCI state and the TCI may be interchangeably interpreted.

### (Radio Communication Method)

When application/configuration of timing advance is supported for each TRP (or in units of TRP), a UE controls UL transmission in each TRP, based on the timing advance corresponding to the TRP (or timing advance group to which the TRP belongs).

Information related to a TRP corresponding to each serving cell (for example, a TRP index/TRP ID) may be configured for/indicated to a UE by a base station by using RRC/MAC CE/downlink control information. The UE may receive related information related to timing advance corresponding to each TRP (for example, information related to a TA value/timing advance command/time alignment timer or the like) from the base station.

In the present disclosure, information related to a TRP (for example, a TRP index/TRP ID) may be interpreted as a control resource set pool index (for example, CORESETPoolIndex) or a new ID/given ID. The new ID/given ID may be a new ID for applying different TA to UL transmission associated with a different ID. For example, a plurality of (for example, two) TRPs being configured for a given serving cell may mean a plurality of (for example, two) CORESET pool indices, given IDs, or given parameters (for example, higher layer parameters) being configured for the given serving cell.

The present embodiment may be applied to both intra-cell multi-TRP (Intra-cell M-TRP) and inter-cell multi-TRP (Inter-cell M-TRP).

In the intra-cell multi-TRP, a plurality of TRPs (or activated TCI states of the plurality of TRPs) may be associated with the same cell ID. The cell ID may be a physical cell ID (PCI).

In the intra-cell multi-TRP, a plurality of TRPs (or activated TCI states of the plurality of TRPs) may be associated with different cell IDs (for example, PCIs). For example, in the inter-cell multi-TRP, two TRPs may be interpreted as two TRPs associated with two respective PCIs.

When application/configuration of timing advance is supported for each TRP (or in units of TRP), each TRP may belong to a different TAG. A plurality of TRPs (for example, two TRPs) of a serving cell may belong to two respective TAGs. The TAG may include a plurality of TRPs from a plurality of serving cells. All the TRPs/serving cells in the TAG use/maintain the same timing advance (TA)/same time alignment timer.

In the present disclosure, a TAG may include one or more sub-TAGs. For example, two TRPs of a serving cell may belong to two respective sub-TAGs and also belong to one TAG. A sub-TAG may include a plurality of TRPs from a plurality of serving cells. All the TRPs/serving cells in the sub-TAG use/maintain the same timing advance (Ta)/same time alignment timer.

### <First Embodiment>

A first embodiment will describe an event/condition that triggers a random access channel operation in a case where application/configuration of timing advance is supported for each TRP (or in units of TRP).

When application/control of timing advance in units of TRP is performed, a UE may judge that a random access procedure is triggered based on a given condition. The given condition may be referred to as an event.

The random access procedure may be interpreted as an RACH procedure, RACH transmission, or PRACH transmission. The event that triggers the random access procedure may be interpreted as a trigger event, a trigger condition, or a condition.

When the UE has judged that a random access procedure is triggered according to the given event (or condition), the UE may initiate the random access procedure (or transmit a PRACH). The given event may be a new event not supported in an existing system (for example, Rel. 17 or previous versions). For example, the random access procedure may be triggered based on at least one of option 1-1 and option 1-2 below.

### {Option 1-1}

Assume a case where multi-TRP is configured for a serving cell and a plurality of timing advances are supported/configured/used for the multi-TRP. In such a case, triggering of the random access procedure may be controlled based on a UL synchronized status of at least one TRP/given TRP.

In the present disclosure, multi-TRP may be two TRPs, for example. In this case, two timing advances may be configured separately for the two respective TRPs. Note that the number of TRPs and the number of timing advances that can be configured/supported are not limited to these. The number of TRPs and the number of timing advances that are configured/supported may be in common or may be different from each other.

When a plurality of timing advances are supported/configured/used for the multi-TRP and the UL synchronized status of a TRP of a cell is non-synchronized (for example, non-synchronised), the UE may judge that the random access procedure (for example, an RACH) is triggered.

A UL synchronized status of a TRP being non-synchronized (for example, non-synchronised) may mean that a time alignment timer of the TRP (or the TAG to which the TRP belongs) expires.

### <<Alt. 1-1-1>>

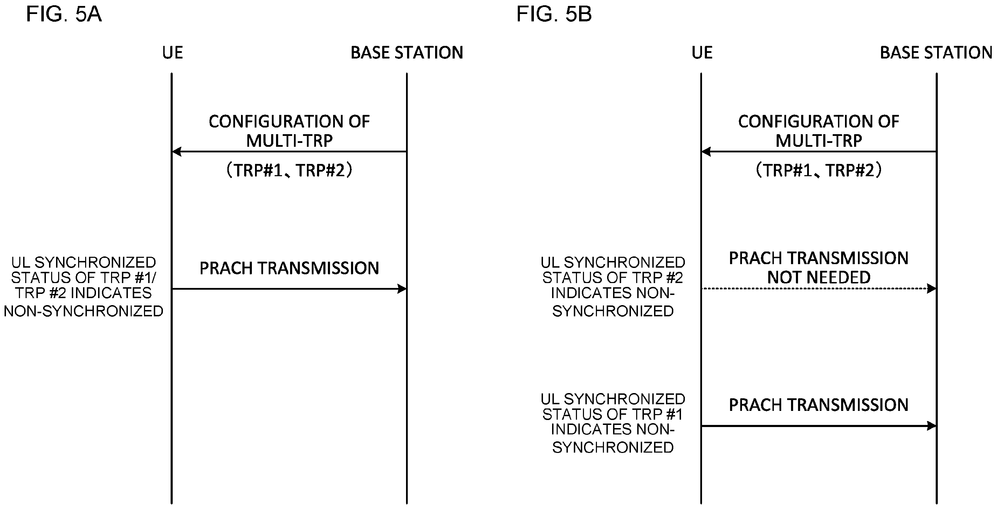

When the UL synchronized status of any one of a plurality of TRPs of a cell is non-synchronized, an RACH may be triggered (see FIG. 5A). For example, when TRP #1 and TRP #2 are configured for a given serving cell and the UL synchronized status of at least one of TRP #1 and TRP #2 is non-synchronized, a UE may judge that an RACH is to be triggered and transmit a PRACH.

Note that, in a case of inter-cell multi-TRP (for example, inter-cell M-TRP), an RACH may be triggered when the UL synchronized status of at least one TRP of TRP #1 corresponding to a serving cell and TRP #2 corresponding to a non-serving cell is non-synchronized.

### <<Alt. 1-1-2>>

When the UL synchronized status of a specific TRP of a plurality of TRPs of a cell is non-synchronized, an RACH may be triggered (see FIG. 5B). The specific TRP may be a TRP having a specific ID (for example, TRP ID = 0 (or TRP ID = 1)), for example. In FIG. 5B, when TRP #1 corresponds to the specific TRP and the UL synchronized status of TRP #1 is non-synchronized, a UE may judge that an RACH is to be triggered. In contrast, when the UL synchronized status of TRP #2 is non-synchronized, the UE need not judge that an RACH is to be triggered (or transmission of a PRACH need not be requested).

Alternatively, in a case of inter-cell multi-TRP (for example, inter-cell M-TRP), the specific TRP may be a TRP related to the PCI (physical cell ID) of the serving cell.

### {Option 1-2}

When multi-TRP is configured for a serving cell and a plurality of timing advances are supported/configured/used for the multi-TRP, an RACH may be triggered to establish time alignment for a TRP of a cell. In other words, a UE/base station may perform control to establish time alignment of a TRP of a cell by triggering the random access procedure.

### <<Alt. 1-2-1>>

An RACH may be triggered to establish time alignment of any one of a plurality of TRPs of a cell. In other words, a UE/base station may establish time alignment of any one of TRPs of a cell by triggering an RACH.

### <<Alt. 1-2-2>>

An RACH may be triggered to establish time alignment of a specific TRP of a plurality of TRPs of a cell. In other words, a UE/base station may establish time alignment of a specific TRP of a cell by triggering an RACH. The specific TRP may be a TRP having a specific ID (for example, TRP ID = 0 (or TRP ID = 1)), for example.

In a case of inter-cell multi-TRP (for example, inter-cell M-TRP), the specific TRP may be a TRP related to the PCI (physical cell ID) of the serving cell. Alternatively, the specific TRP may be a TRP related to the PCI (physical cell ID) of a non-serving cell.

As described above, even when application/configuration of timing advance is supported for each TRP, control of an event/condition for trigger of a random access procedure in units of TRP enables a UL synchronized status or establishment of time alignment of each TRP to be appropriately performed.

### <Second Embodiment>

A second embodiment will describe indication/use of a timing advancement command (for example, a TAC) in a case where application/configuration of timing advance is supported for each TRP (or in units of TRP). The second embodiment may be applied in combination with the first embodiment. For example, an RAR in the second embodiment may be a response signal corresponding to RACH transmission triggered in the first embodiment or may be a response signal corresponding to another RACH transmission transmitted under another condition.

A UE may receive a TAC in a random access response message (for example, RAR message) for a serving cell belonging to a TAG or message B (for example, MSGB) for a special cell (for example, an SpCell). When a random access preamble is not selected from contention-based random access preambles by a MAC entity, a TAC for the TAG may be used. In other cases, when a time alignment timer associated with the TAG is nor running, the TAC for the TAG may be used.

Assume a case where a UE receives a TA command in an RAR for a serving cell for which multi-TRP are configured and a plurality of (for example, two) timing advances are supported/configured/used for the multi-TRP. In such a case, at least one of option 2-1 to option 2-3 below may be employed.

### {Option 2-1}

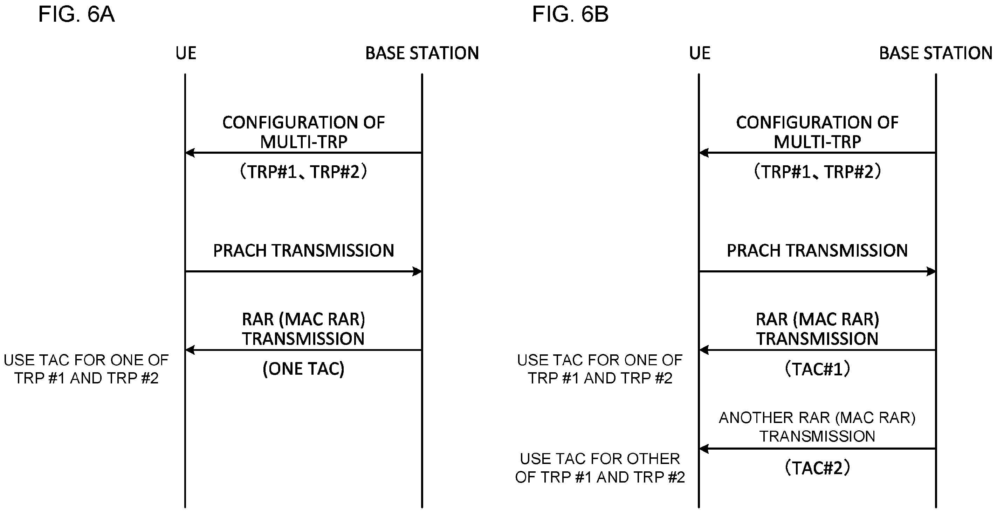

One TAC may be indicated in a random access response (RAR), and the TAC may be used for a plurality of TRPs (for example, two TRPs) of a serving cell. When one TAC is indicated by a response signal for PRACH transmission triggered based on a given event/condition, a UE may commonly use the TAC for the plurality of TRPs (see FIG. 6A).

For example, when TRP #1 and TRP #2 are configured for a given serving cell and one TAC is indicated by an RAR, the TAC indicated by the RAR may be used for both TRP #1 and TRP #2.

In this case, the one TAC may be used for a timing advance group (TAG)/sub-TAG to which each of the plurality of TRPs (TRP #1/TRP #2) of the serving cell belongs. For example, when first TRP #1 belongs to first TAG #1 and second TRP #2 belongs to second TAG #2, the UE uses the TAC indicated by the RAR for both first TAG #1 and second TAG #2.

Alternatively, when first TRP #1 belongs to first sub-TAG #1 and second TRP #2 belongs to second sub-TAG #2, the UE uses the TAC indicated by the RAR for both first sub-TAG #1 and second sub-TAG #2. Note that first sub-TAG #1 and second sub-TAG #2 may belong to the same TAG.

### {Option 2-2}

A plurality of (for example, two) TACs may be indicated in an RAR, and the plurality of TACs may be used for a plurality of respective TRPs (for example, two respective TRPs) of a serving cell. When two TACs (TAC #1 and TAC #2) are indicated by a response signal for PRACH transmission triggered based on a given event/condition, a UE may use the two TACs for the two respective TRPs (see FIG. 6B).

For example, when TRP #1 and TRP #2 are configured for a given serving cell and two TACs, i.e., TAC #1 and RAC #2, are indicated by an RAR, the UE may use TAC #1 for TRP #1 and use TAC #2 for TRP #2.

In this case, the two TACs may be used for TAGs/sub-TAGs of the plurality of TRPs of a serving cell. For example, when first TRP #1 belongs to first TAG #1 and second TRP #2 belongs to second TAG #2, the UE uses first TAC #1 indicated by the RAR for first TAG #1 and uses second TAC #2 indicated by the RAR for second TAG #2.

Alternatively, when first TRP #1 belongs to first sub-TAG #1 and second TRP #2 belongs to second sub-TAG #2, the UE uses TAC #1 indicated by the RAR for first sub-TAG #1 and uses TAC #2 indicated by the RAR for second sub-TAG #2. Note that first sub-TAG #1 and second sub-TAG #2 may belong to the same TAG.

In a case of inter-cell multi-TRP, for example, TRP #1 may be configured for a serving cell, TRP #2 may be configured for a non-serving cell, and two TACs, i.e., TAC #1 and TAC #2, may be indicated by an RAR. In this case, the UE may use TAC #1 for TRP #1 and use TAC #2 for TRP #2.

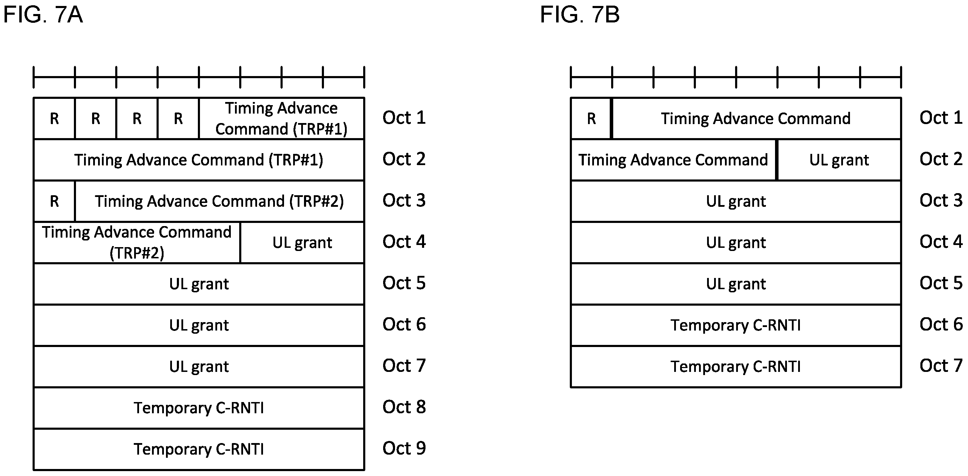

FIG. 7A is a diagram to show an example of an RAR (for example, a MAC RAR) used for indication of two TACs. The MAC RAR may be referred to as a MAC payload for RAR.

The MAC RAR shown in FIG. 7A shows an example including TAC #1 corresponding to TRP #1 and TAC #2 corresponding to TAR #2. Note that the configuration of the MAC CE shown in FIG. 7A is an example, and the number of bits of each TAC field, the location/order of each TAC field, and the location/order of each reserved bit (R) are not limited to this.

The MAC CE (MAC RAR) shown in FIG. 7A and a MAC CE supported in an existing system (for example, Rel. 17 or previous versions) (see FIG. 7B) may be used in a switched manner. A UE may judge which MAC CE to receive, based on a configuration of a higher layer parameter and the like. Alternatively, the UE may judge which MAC CE to receive, based on a MAC header and the like.

Whether two TA values are enabled or only one TA value (for example, a TA value for a specific TRP) is enabled may be indicated.

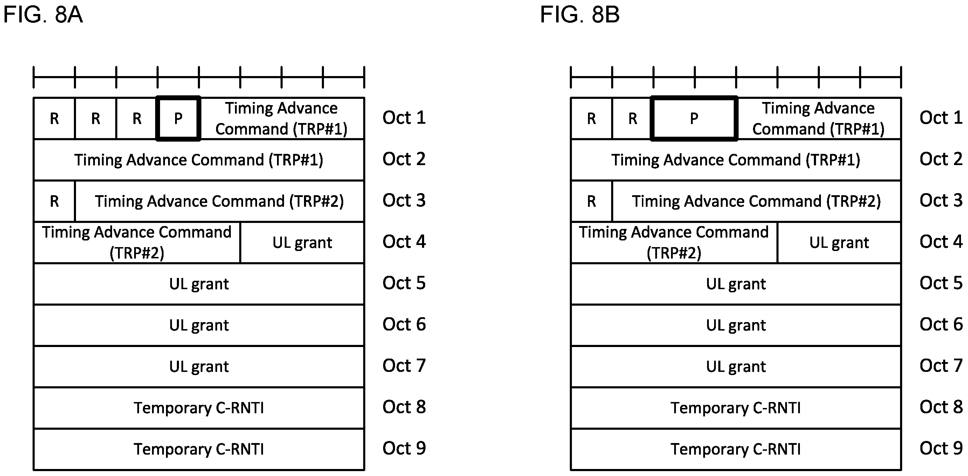

FIGS. 8A and 8B are diagrams to show other examples of an RAR (for example, a MAC RAR) used for indication of two TACs. Specifically, FIGS. 8A and 8B show a case of including a field (P field) indicating whether or not two TAC fields are present, in a MAC RAR.

In FIG. 8A, the P field is constituted of 1 bit, and the P field indicates any of a case where two TAC fields are present (for example, P = 0) and a case where only one TAC field is present (for example, P = 1). Note that P = 1 may indicate the presence of two TAC fields, and P = 0 may indicate a case where only one TAC field is present.

FIG. 8B shows a case where a P field indicates the presence (or presence/absence) of two TAC fields and TRP indices. The P field may be constituted of a plurality of bits (for example, 2 bits). For example, P = 00 may mean that two TAC fields are present. P = 01 may mean that one TAC field is present and is used for the first TRP (for example, TRP ID = 0). P = 10 may mean that one TAC field is present and is used for the second TRP (for example, TRP ID = 1). P = 11 may be for reserve. Note that contents meant by the codepoints (P = 00/01/10/11) of the P field may be switched as appropriate.

### {Option 2-3}

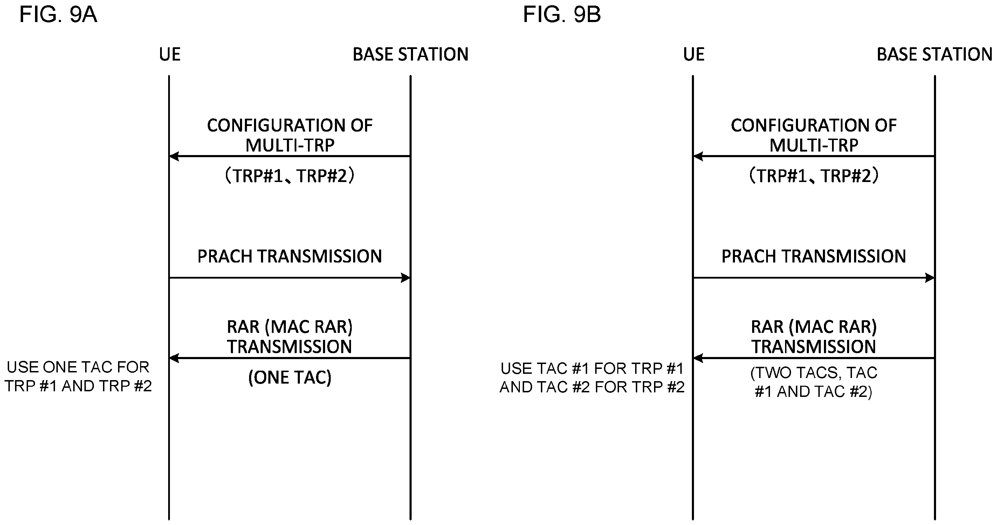

One TAC may be indicated in an RAR, and the TAC may be used for one TRP of a plurality of TRPs (for example, two TRPs) of a serving cell. When one TAC is indicated by a response signal for PRACH transmission triggered based on a given event/condition, a UE may use the one TAC for one TRP of two TRPs (see FIG. 9A).

For example, when TRP #1 and TRP #2 are configured for a given serving cell and one TAC is indicated by an RAR, the TAC indicated by the RAR may be used for one of TRP #1 and TRP #2.

In this case, the one TAC may be used for a TAG/sub-TAG to which one TRP of the plurality of TRPs of a serving cell belongs. For example, when first TRP #1 belongs to first TAG #1 (or sub-TAG #1) and second TRP #2 belongs to second TAG #2 (or sub-TAG #2), the UE uses the TAC indicated by the RAR for one of first TAG #1 (sub-TAG #1) and second TAG #2 (sub-TAG #2).

When one TAC indicated by an RAR (for example, a MAC RAR) for one of two TRPs, TA (or a TA value) to be used for the other TRP may be determined based on a given rule. For example, at least one of option 2-3-1 and option 2-3-2 below may be employed.

### <<Option 2-3-1>>

The TA for the other TRP may be indicated by a TAC included in another MAC RAR. For example, the UE may receive information related to first TAC #1 to be used for first TRP #1 (or first TAG #1 to which first TRP #1 belongs) and information related to second TAC #2 to be used for second TRP #2 (or second TAG #1 to which second TRP #2 belongs), in different MAC RARs (see FIG. 9B).

### <<Option 2-3-2>>

The TA for the other TRP may be indicated by another MAC CE (for example, a MAC CE other than a MAC RAR). For example, one TAC indicated by an RAR (for example, a MAC RAR) may be used for TRP #1, and information indicated by another MAC CE may be used for TRP #2, to control timing advances of the TRPs.

### {{Option 2-3-2-1}}

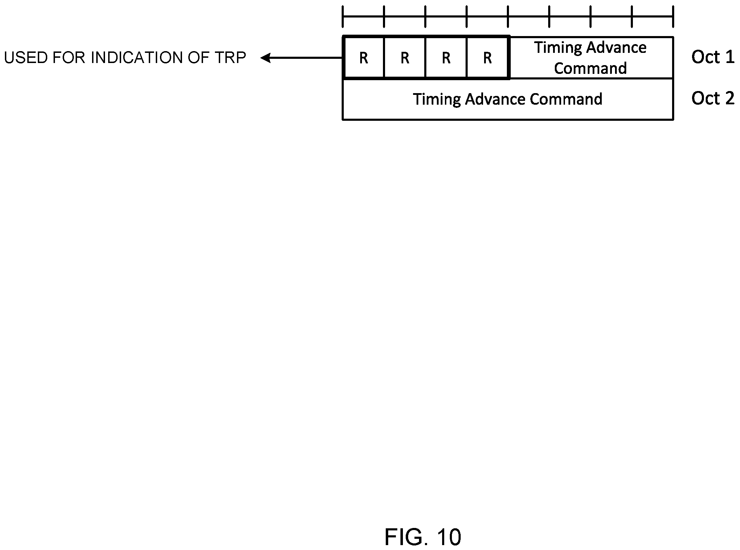

N_{TA} of a TRP may be indicated by another MAC CE. For example, as another MAC CE, a MAC CE related to a timing advance command (for example, an Absolute Timing Advance Command MAC CE) may be reused. In this case, a TRP index may be indicated by using a reserved bit (reserved bit of at least 1 bit) included in the MAC CE related to the timing advance command (see FIG. 10).

### {{Option 2-3-2-2}}

An offset for a TAC (for example, N_{TA}) indicated by an RAR may be indicated by another MAC CE. In this case, TA determined based on a TAC included in the RAR and another MAC CE may be used for the TAG/sub-TAG to which a TRP (for example, another TRP) of a serving cell belongs.

A UE determines a TAC (or TA) to use for first TRP #1, based on the TAC indicated by the MAC RAR. The UE may determine a TAC (or TA) to use for second TRP #2, based on the TAC indicated by the MAC RAR and information (for example, the offset) indicated by the other MAC CE.

### <Third Embodiment>

A third embodiment will describe a method of determining, when a TAC (for example, one TAC) indicated by an RAR is used for one TRP of a serving cell, one TRP to which the TAC is to be used. For example, the third embodiment may be applied in combination with option 2-3 of the second embodiment.

A UE receives a TAC by an RAR for a serving cell for which multi-TRP are configured and uses, when two TAs are supported for the multi-TRP, the TAC indicated by the RAR for any of the TRP of the serving cell. The TRP (for example, one TRP) for which the TAC indicated by the RAR is used may be determined based on at least one of option 3-1 to option 3-5 below.

### {Option 3-1}

A TRP (for example, a specific TRP) for which one TAC indicated by an RAR in advance may be defined in a specification in advance. The specific TRP may be a TRP having a specific ID (for example, TRP ID = 0 or TRP ID = 1), for example.

When inter-cell multi-TRP are supported/configured, the specific TRP may be a TRP associated with a specific cell ID (or a specific physical cell ID). The specific cell ID may be the cell ID of a serving cell (for example, serving cell PCI).

### {Option 3-2}

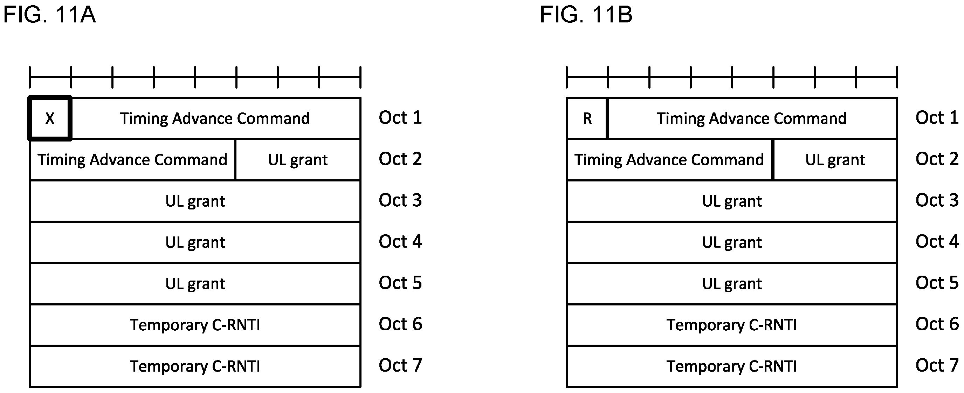

A specific TRP for which one TAC indicated by an RAR may be indicated by a MAC RAR. For example, by using a reserved bit of a MAC RAR supported in an existing system (for example, Rel. 17 or previous versions), a specific TRP (for example, a TRP index) may be indicated (see FIG. 11A).

FIG. 11A is a diagram to show an example of an RAR (for example, a MAC RAR) used for indication of a TAC and indication of a TRP for which the TAC is to be used.

The MAC RAR shown in FIG. 11A indicates an example including one TAC field and a field (here, an X field) indicating a TRP to which the TAC field is applied. Note that the configuration of the MAC CE shown in FIG. 11A is an example, and the number of bits of each TAC field, the location/order of each TAC field, and the location/order of the field (X field) to be used for indication of a TRP are not limited to this.

By the X field, a TRP index may be indicated. For example, X = 0 may indicate that a TAC is used for the TRP with TRP ID = 0, and X = 1 may indicate that a TAC is used for the TRP with TRP ID = 1. Note that X = 1 may indicate that a TAC is used for the TRP with TRP ID = 0 and X = 0 may indicate that a TAC is used for the TRP with TRP ID = 1.

The MAC CE (MAC RAR) shown in FIG. 11A and a MAC CE supported in an existing system (for example, Rel. 17 or previous versions) (see FIG. 11B) may be used in a switched manner. A UE may judge which MAC CE to receive, based on a configuration of a higher layer parameter and the like. Alternatively, the UE may judge which MAC CE to receive, based on a MAC header and the like.

### {Option 3-3}

In an RACH indicated by a PDCCH (or a PDCCH order) (for example, a PDCCH ordered RACH), a specific TRP may be indicated by the PDCCH order. For example, by using a reserved bit in a PDCCH order, a specific TRP (for example, a TRP index) may be indicated. A UE may use a TAC indicated by a response signal for a PRACH transmitted based on the PDCCH order, for a TRP indicated by the PDCCH.

For inter-cell multi-TRP (for example, inter-cell M-TRP), a reserved bit of a PDCCH order may be used for indication of a serving cell or a non-serving cell. An RACH indicated by a PDCCH (for example, a PDCCH ordered RACH) and a corresponding RAR may be used for the TRP of the serving cell or the non-serving cell indicated by the PDCCH.

### {Option 3-4}

In an RACH indicated by a PDCCH (or a PDCCH order), a TRP index may be associated with a CORESET/TCI state of the PDCCH. The RACH indicated by the PDCCH and a corresponding RAR may be used for a TRP associated with a CORESET/TCI state of the PDCCH.

For example, when DCI #1 associated with CORESET pool index #0 (PDCCH #1) triggers an RACH (for example, a PDCCH ordered RACH), a specific TRP may be a TRP corresponding to CORESET pool index #0 (for example, TRP #0). When DCI #2 associated with CORESET pool index #1 (PDCCH #2) triggers an RACH (for example, a PDCCH ordered RACH), a specific TRP may be a TRP corresponding to CORESET pool index #1 (for example, TRP #1).

For inter-cell multi-TRP (for example, inter-cell M-TRP), a serving cell or a non-serving cell may be associated with the CORESET/TCI state of the PDCCH. An RACH indicated by the PDCCH (for example, a PDCCH ordered RACH) and a corresponding RAR may be used for the TRP of the serving cell or the non-serving cell associated with the CORESET/TCI state of the PDCCH.

### {Option 3-5}

The specific TRP index may be associated with an SSB/CSI-RS/RACH preamble index (for example, an ra-PreambleIndex)/PRACH occasion. A TAC indicated by an RAR may be used for a TRP associated with an SSB/CSI-RS/ra-PreambleIndex/PRACH occasion selected in a random access resource selection procedure.

The association between the TRP index and the SSB/CSI-RS/ra-PreambleIndex/PRACH occasion may be defined in a specification in advance or may be configured for a UE by a base station by a higher layer parameter.

For inter-cell multi-TRP (for example, inter-cell M-TRP), a serving cell or a non-serving cell may be associated with an SSB/CSI-RS/ra-PreambleIndex/PRACH occasion. A TAC indicated by an RAR may be used for a TRP of a serving cell or a non-serving cell associated with an SSB/CSI-RS/ra-PreambleIndex/PRACH occasion selected in a random access resource selection procedure.

### <Fourth Embodiment>

A fourth embodiment will describe a UE operation in a case where one or a plurality of (for example, two) time alignment timers are maintained/used/configured for a plurality of (for example, two) TRPs. For example, the fourth embodiment may be applied in combination with each of options of the second embodiment.

### {Case 4-1}

Assumed is a case where one TAC is indicated by an RAR and the TAC is used for a plurality of (for example, two) TRPs (for example, option 2-1) or a case where two TACs are indicated by an RAR and the two TACs are used for a plurality of (for example, two) respective TRPs (option 2-2). Also assumed is a case where one time alignment timer is maintained for two TRPs of a serving cell. Note that "maintain" may be interpreted as "use" or "configure." Two TRPs of a serving cell may be interpreted as a TRP of a serving cell and a TRP of a non-serving cell in inter-cell multi-TRP.

In this case, when a UE has received a TAC by an RAR, the UE may perform control to start or restart a time alignment timer of the serving cell. A time alignment timer of a serving cell may be interpreted as a time alignment timer of a TAG to which a serving cell belongs.

In other words, when the UE has received a TAC by an RAR, the UE may start or restart a time alignment timer for a plurality of TRPs.

### {Case 4-2}

Assumed is a case where one TAC is indicated by an RAR and the TAC is used for a plurality of (for example, two) TRPs (for example, option 2-1) or a case where two TACs are indicated by an RAR and the two TACs are used for a plurality of (for example, two) respective TRPs (option 2-2). Also assumed is a case where two time alignment timers are maintained for two respective TRPs of a serving cell.

In this case, when a UE has received a TAC by an RAR, the UE may perform control to start or restart two time alignment timers corresponding to the two respective TRPs of the serving cell. A time alignment timer corresponding to a TRP of a serving cell may be interpreted as a time alignment timer corresponding to a TAG/sub-TAG to which a TRP of a serving cell belongs.

### {Case 4-3}

Assumed is a case where one TAC is indicated by an RAR and the TAC is used for one TRP of a plurality of (for example, two) TRPs and TA of another TRP is indicated by a TAC of another MAC RAR (for example, option 2-3-1). Also assumed is a case where one time alignment timer is maintained for two TRPs of a serving cell.

In this case, when a UE has received a TAC by an RAR, the UE may employ at least one of option 4-3-1 and option 4-3-2 below.

### <<Option 4-3-1>>

When a UE has received a TAC for any one TRP of two TRPs of a serving cell by an RAR, the UE may perform control to start or restart a time alignment timer of a serving cell (or two TRPs).

### <<Option 4-3-2>>

When a UE has received a TAC for a specific TRP of two TRPs of a serving cell by an RAR, the UE may perform control to start or restart a time alignment timer of a serving cell (or two TRPs).

The specific TRP may be a TRP having a specific ID (for example, TRP ID = 0 (or TRP ID = 1)), for example. Alternatively, in a case of inter-cell multi-TRP (for example, inter-cell M-TRP), the specific TRP may be a TRP related to the PCI (physical cell ID) of the serving cell.

### {Case 4-4}

Assumed is a case where one TAC is indicated by an RAR and the TAC is used for one TRP of a plurality of (for example, two) TRPs and TA of another TRP is indicated by a TAC of another MAC RAR (for example, option 2-3-1). Also assumed is a case where two time alignment timers are maintained for two respective TRPs of a serving cell.

In this case, when a UE has received a TAC of a TRP by an RAR, the UE may perform control to start or restart a time alignment timer of the TRP (time alignment timer of a TAG/sub-TAG to which the TRP belongs). The UE may perform separate control to start or restart of a time alignment timer for each TRP.

### {Case 4-5}

Assumed is a case where one TAC is indicated by an RAR, and the TAC is used for one TRP of a plurality of (for example, two) TRPs, and TA of another TRP is indicated/determined by another MAC CE (for example, option 2-3-2). Also assumed is a case where one time alignment timer is maintained for two TRPs of a serving cell.

In this case, when a UE has received a TAC of a TRP by an RAR, the UE may perform control to start or restart a time alignment timer of the serving cell (or two TRPs).

When a UE has received a TAC (or acquired TA) by another MAC CE, the UE may perform control to start or restart the time alignment timer of the serving cell (or two TRPs). Alternatively, when a UE has received a TAC (or acquired TA) by another MAC CE, the UE may perform control not to perform an operation related to a time alignment timer (or the UE need not be requested to start or restart the time alignment timer).

### {Case 4-6}

Assumed is a case where one TAC is indicated by an RAR, and the TAC is used for one TRP of a plurality of (for example, two) TRPs, and TA of another TRP is indicated/determined by another MAC CE (for example, option 2-3-2). Also assumed is a case where two time alignment timers are maintained for two respective TRPs of a serving cell.

In this case, when a UE has received a TAC of a TRP (for example, a specific TRP) by an RAR, the UE may perform control to start or restart a time alignment timer of the TRP (or a time alignment timer of a TAG/sub-TAG to which the TRP belongs). The UE may perform separate control to start or restart of a time alignment timer for each TRP.

When a UE has received a TAC (or acquired TA) by another MAC CE, the UE may perform control to start or restart a time alignment timer of another TRP (or a time alignment timer of a TAG/sub-TAG to which the other TRP belongs).

### <Fifth Embodiment>

A fifth embodiment will describe a random access resource selection rule in a case where an RACH for each TRP (or in units of TRP) is triggered and acquisition of TA for each TRP is supported.

In contention-based random access (CBRA), an SSB/CSI-RS/ra-PreambleIndex/PRACH occasion is selected for random access resource selection according to a given rule. The given rule may be referred to as random access resource selection.

In an existing system, when at least one SSB exceeding a given threshold (for example, rsrp-ThresholdSSB) is present in contention-based random access preamble selection, the SSB exceeding the threshold is selected. Otherwise, any of SSBs is selected.

A random access preamble is randomly selected from random access preambles associated with the selected SSB and a selected random access preamble group, at an equal probability. In addition, a preamble index (for example, PREAMBLE_INDEX) is set in the selected random access preamble.

When an SSB is selected, a PRACH occasion available next is determined from PRACH occasions corresponding to the selected SSB. Alternatively, when a CSI-RS is selected, a PRACH occasion available next is determined from PRACH occasions according to the selected CSI-RS.

When an RACH for each TRP (or in units of TRP) is triggered and acquisition of TA for the TRP is supported, an SSB/CSI-RS/ra-PreambleIndex/PRACH occasion may be associated with a TRP index. In a case of inter-cell multi-TRP (for example, inter-cell M-TRP), SSBs/CSI-RSs/RACH configurations of a plurality of additional PCIs cells (for example, Multiple additional PCI cells) may be configured for a UE.

### {Option 5-1}

For a CBRA triggered by a PDCCH (or a PDCCH order), a TRP index may be indicated by the PDCCH. Alternatively, the TRP index may be associated with a CORESET/TCI state of the PDCCH.

A random access resource may be determined based on an SSB/CSI-RS/ra-PreambleIndex/PRACH occasion associated with a TRP index (or may be selected from an SSB/CSI-RS/ra-PreambleIndex/PRACH occasion). The TRP index may be indicated by a PDCCH or may be a TRP index associated with the PDCCH.

For a method of selecting a random access resource from an SSB/CSI-RS/ra-PreambleIndex/PRACH occasion, a rule in an existing system (for example, Rel. 17 or previous versions) may be employed.

### {Option 5-2}

For CBRA triggered by a given event/condition, a random access resource may be determined based on an SSB/CSI-RS/ra-PreambleIndex/PRACH occasion associated with a TRP (or may be selected from an SSB/CSI-RS/ra-PreambleIndex/PRACH occasion).

The given event/condition may be an event/condition described in the first embodiment. In a case according to the first embodiment, an RACH procedure is triggered for a non-synchronized state of a TRP of a serving cell or is triggered to establish time alignment for a TRP of a serving cell. In such a case, a UE may select a random access resource from an SSB/CSI-RS/ra-PreambleIndex/PRACH occasion associated with the TRP.

For a method of selecting a random access resource from an SSB/CSI-RS/ra-PreambleIndex/PRACH occasion, a rule in an existing system (for example, Rel. 17 or previous versions) may be employed.

### {Option 5-3}

For CBRA triggered by an unsuccessful contention resolution, a random access resource may be determined based on the same TRP as the TRP used in preceding random access resource selection.

For example, assumed is a case where a random access resource in preceding preamble transmission is selected from an SSB/CSI-RS/ra-PreambleIndex/PRACH occasion associated with a given TRP. In this case, a random access resource in the CBRA triggered by an unsuccessful contention resolution may be determined based on an SSB/CSI-RS/ra-PreambleIndex/PRACH occasion associated with the same TRP as that of the preceding preamble transmission (or may be selected from an SSB/CSI-RS/ra-PreambleIndex/PRACH occasion).

### <Supplement>

At least one of the above-described embodiments may be applied only to a UE that has reported a specific UE capability or that supports the specific UE capability.

The specific UE capability may indicate at least one of the following:
- supporting of a plurality of (for example, two) timing advances for multi-TRP
- supporting of a plurality of (for example, two) timing advances for intra-cell multi-TRP
- supporting of a plurality of (for example, two) timing advances for inter-cell multi-TRP

The specific UE capability may be a capability applied over all the frequencies (in common irrespective of frequency), may be a capability per frequency (for example, cell, band, or BWP), may be a capability per frequency range (for example, Frequency Range 1 (FR1), FR2, FR3, FR4, FR5, FR2-1, and FR2-2), or a capability per subcarrier spacing (SCS).

The specific UE capability may be a capability applied over all the duplex schemes (in common irrespective of duplex scheme) or a capability per duplex scheme (for example, time division duplex (TDD) and frequency division duplex (FDD)).

At least one of the above-described embodiments may be applied to a case where a UE is configured with specific information related to the above-described embodiment by higher layer signaling or is configured with a specific UE capability.

When the UE does not support at least one of the specific UE capabilities above or is not configured with the specific information, the UE may perform a Rel-15/16 operation, for example.

### (Supplementary Note)

Regarding one embodiment of the present disclosure, the following supplementary notes of the invention will be given.

### {Supplementary Note 1-1}

A terminal including: a receiving section that receives information related to timing advance to be used for a transmission/reception point; and a control section that judges, when configuration of timing advance for each transmission/reception point is supported, trigger of a random access procedure, based on at least one of an uplink synchronized status of each transmission/reception point and establishment of time alignment of each transmission/reception point.

### {Supplementary Note 1-2}

The terminal according to supplementary note 1-1, wherein, when a plurality of transmission/reception points are configured for a serving cell, the control section judges that the random access procedure is triggered when an uplink synchronized status of a specific transmission/reception point indicates non-synchronized.

### {Supplementary Note 1-3}

The terminal according to supplementary note 1-1 or 1-2, wherein, when a plurality of transmission/reception points are configured for a serving cell, the control section judges that the random access procedure is triggered when time alignment of a specific transmission/reception point is established.

### {Supplementary Note 1-4}

The terminal according to any one of supplementary notes 1-1 to 1-3, wherein, when the random access procedure is triggered, the control section selects a random access resource to be used for the random access procedure, in consideration of a transmission/reception point with the uplink synchronized status being non-synchronized or a transmission/reception point for which a time alignment timer is established.

### {Supplementary Note 2-1}

A terminal including: a receiving section that receives one or more timing advance commands included in a MAC control element (MAC CE) for a random access response; and a control section that judges, when application of timing advance in unit of transmission/reception point is supported, timing advance to be applied to a plurality of transmission/reception points, based on the one or more timing advance commands or based on the one or more timing advance commands and information indicated by another MAC CE.

### {Supplementary Note 2-2}

The terminal according to supplementary note 2-1, wherein, when one timing advance command is included in the MAC CE for a random access response, the control section uses the one timing advance command for a specific transmission/reception point.

### {Supplementary Note 2-3}

The terminal according to supplementary note 2-1 or 2-2, wherein, when one or more timing advance commands included in the MAC CE for a random access response are received, the control section uses one timing advance timer for a plurality of transmission/reception points.

### {Supplementary Note 2-4}

The terminal according to any one of supplementary notes 2-1 to 2-3, wherein, when one or more timing advance commands included in the MAC CE for a random access response are received, the control section uses different timing advance timers for a plurality of transmission/reception points.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

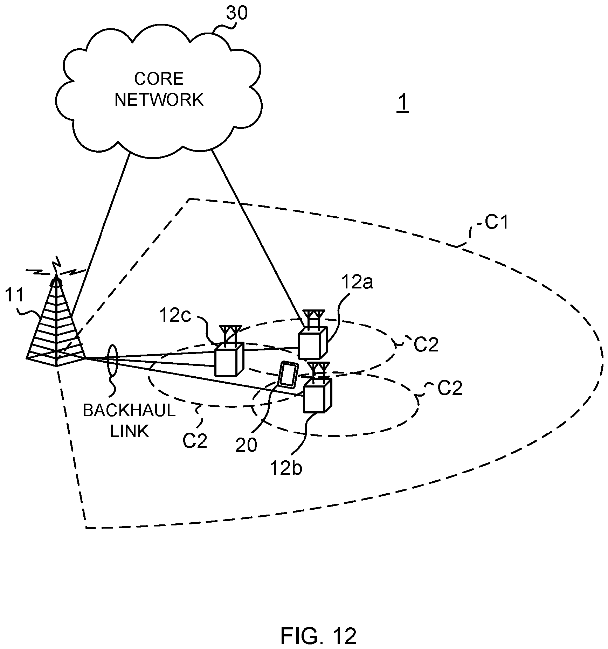

FIG. 12 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as a User Plane Function (UPF), an Access and Mobility management Function (AMF), a Session Management Function (SMF), a Unified Data Management (UDM), an ApplicationFunction (AF), a Data Network (DN), a Location Management Function (LMF), and an operation administration and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for PBCH) may be referred to as an SS/PBCH block, SS Block (SSB), and the like. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

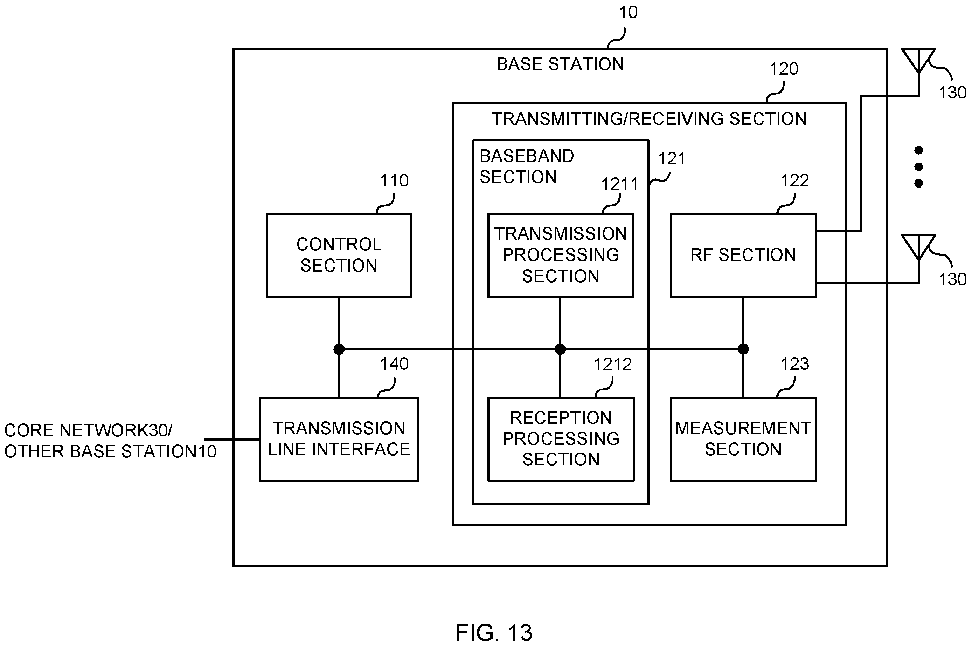

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node providing an NF) included in the core network 30, another base station 10, or the like, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to timing advance to be used for a transmission/reception point. The control section 110 may control, when configuration of timing advance of each transmission/reception point is supported, a random access procedure triggered based on at least one of an uplink synchronized status of each transmission/reception point and establishment of time alignment of each transmission/reception point.

The transmitting/receiving section 120 may transmit one or more timing advance commands included in a MAC control element (MAC CE) for a random access response. The control section 110 may perform, when application of timing advance in unit of transmission/reception point is supported, control to indicate timing advance to be applied to a plurality of transmission/reception points, by using the one or more timing advance commands or using the one or more timing advance commands and information indicated by another MAC CE.

### (User Terminal)

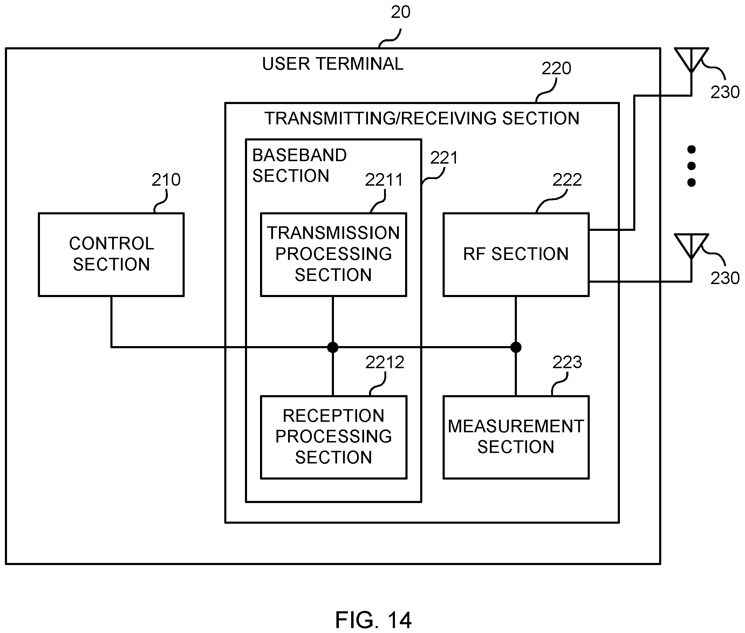

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to timing advance to be used for a transmission/reception point. The control section 210 may judge, when configuration of timing advance of each transmission/reception point is supported, trigger of a random access procedure, based on at least one of an uplink synchronized status of each transmission/reception point and establishment of time alignment of each transmission/reception point.

When a plurality of transmission/reception points are configured for a serving cell, the control section 210 may judge that the random access procedure is triggered when an uplink synchronized status of a specific transmission/reception point indicates non-synchronized. When a plurality of transmission/reception points are configured for a serving cell, the control section 210 may judge that the random access procedure is triggered when time alignment of a specific transmission/reception point is established. When the random access procedure is triggered, the control section 210 may select a random access resource to be used for the random access procedure, in consideration of a transmission/reception point with the uplink synchronized status being non-synchronized or a transmission/reception point for which a time alignment timer is established.

The transmitting/receiving section 220 may receive one or more timing advance commands included in a MAC control element (MAC CE) for a random access response. The control section 210 may judge, when application of timing advance in unit of transmission/reception point is supported, timing advance to be applied to a plurality of transmission/reception points, based on the one or more timing advance commands or based on the one or more timing advance commands and information indicated by another MAC CE.

When one timing advance command is included in the MAC CE for a random access response, the control section 210 may use the one timing advance command to a specific transmission/reception point. When one or more timing advance commands included in the MAC CE for a random access response are received, the control section 210 may use one timing advance timer to a plurality of transmission/reception points. When one or more timing advance commands are included in the MAC CE for a random access response, the control section 210 may use different timing advance timers for a plurality of transmission/reception points.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

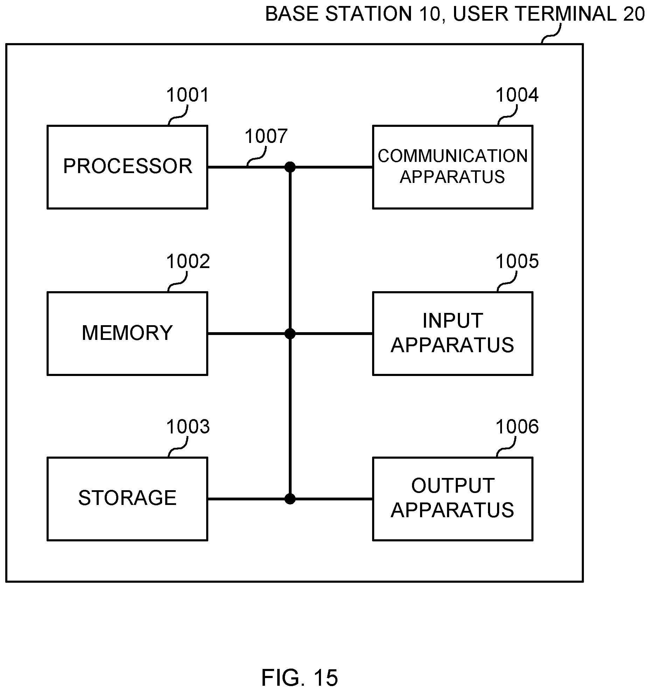

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of given information (for example, notification of "X holds") does not necessarily have to be notified explicitly, and can be notified implicitly (by, for example, not notifying this given information or notifying another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a base station transmitting information to a terminal and the base station indicating control/operation based on the information to the terminal may be interchangeably interpreted.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

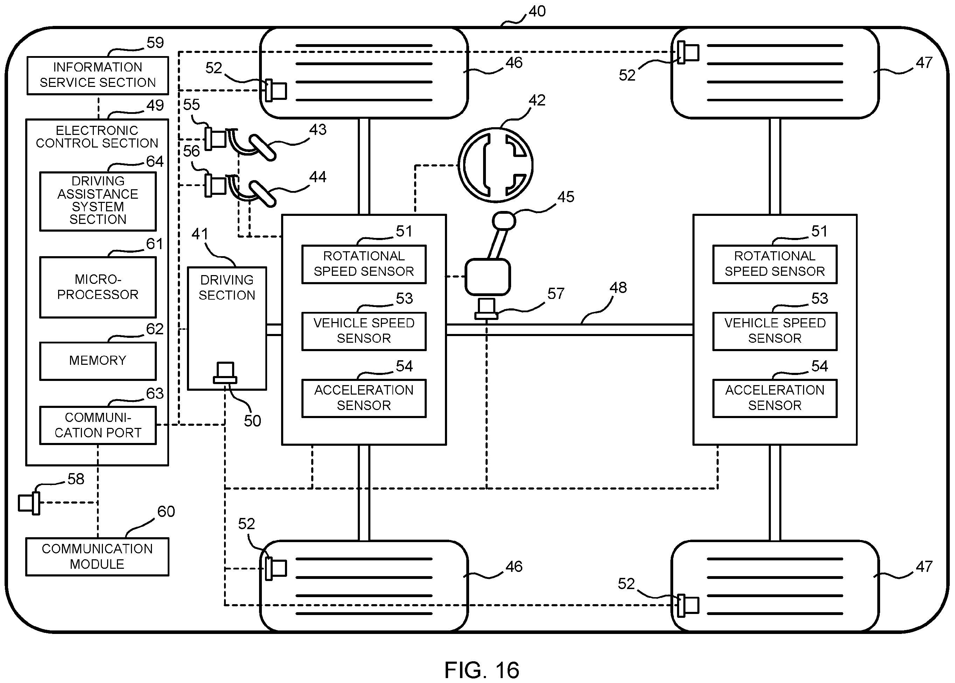

FIG. 16 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives one or more timing advance commands included in a MAC control element (MAC CE) for a random access response; and
a control section that judges, when application of timing advance in unit of transmission/reception point is supported, timing advance to be applied to a plurality of transmission/reception points, based on the one or more timing advance commands or based on the one or more timing advance commands and information indicated by another MAC CE.

2. The terminal according to claim 1, wherein
when one timing advance command is included in the MAC CE for a random access response, the control section uses the one timing advance command for a specific transmission/reception point.

3. The terminal according to claim 1, wherein
when one or more timing advance commands included in the MAC CE for a random access response are received, the control section uses one timing advance timer for a plurality of transmission/reception points.

4. The terminal according to claim 1, wherein
when one or more timing advance commands included in the MAC CE for a random access response are received, the control section uses different timing advance timers for a plurality of transmission/reception points.

5. A radio communication method for a terminal, the radio communication method comprising:
receiving one or more timing advance commands included in a MAC control element (MAC CE) for a random access response; and
judging, when application of timing advance in unit of transmission/reception point is supported, timing advance to be applied to a plurality of transmission/reception points, based on the one or more timing advance commands or based on the one or more timing advance commands and information indicated by another MAC CE.

6. A base station comprising:
a transmitting section that transmits one or more timing advance commands included in a MAC control element (MAC CE) for a random access response; and
a control section that performs, when application of timing advance in unit of transmission/reception point is supported, control to indicate timing advance to be applied to a plurality of transmission/reception points, by using the one or more timing advance commands or using the one or more timing advance commands and information indicated by another MAC CE.
